(19) Europäisches Patentamt
European Patent Office
Office européen des brevets

(11) **EP 4 512 616 A1**

(12) **EUROPEAN PATENT APPLICATION**
published in accordance with Art. 153(4) EPC

(43) Date of publication:
**26.02.2025 Bulletin 2025/09**

(21) Application number: **23819594.5**

(22) Date of filing: **15.05.2023**

(51) International Patent Classification (IPC):
**B32B 27/18** (2006.01)  **C09D 191/06** (2006.01)
**C09D 201/00** (2006.01)  **B32B 15/08** (2006.01)
**C09D 7/45** (2018.01)  **C09D 7/61** (2018.01)
**C09D 7/63** (2018.01)  **C23C 26/00** (2006.01)

(52) Cooperative Patent Classification (CPC):
**B32B 15/08; B32B 27/18; C09D 7/45; C09D 7/61;
C09D 7/63; C09D 191/06; C09D 201/00;
C23C 26/00**

(86) International application number:
**PCT/JP2023/018184**

(87) International publication number:
**WO 2023/238610 (14.12.2023 Gazette 2023/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.06.2022 JP 2022092578**

(71) Applicant: **JFE Steel Corporation
Tokyo 100-0011 (JP)**

(72) Inventors:
• **KOIBUCHI, Shun
Tokyo 100-0011 (JP)**
• **AOYAMA, Tomohiro
Tokyo 100-0011 (JP)**
• **FURUYA, Shinichi
Tokyo 100-0011 (JP)**
• **MATSUDA, Takeshi
Tokyo 100-0011 (JP)**
• **SAEKI, Michitoshi
Tokyo 100-0011 (JP)**
• **KAWANO, Takashi
Tokyo 100-0011 (JP)**

(74) Representative: **Hoffmann Eitle
Patent- und Rechtsanwälte PartmbB
Arabellastraße 30
81925 München (DE)**

(54) **COATED STEEL SHEET AND PRODUCTION METHOD THEREFOR**

(57) Provided is a coated steel sheet having excellent press formability. The coated steel sheet includes a base steel sheet and, on at least one side of the base steel sheet, a film containing organic resin and wax. The organic resin is at least one selected from the group consisting of acrylic resins, epoxy resins, urethane resins, phenolic resins, vinyl acetate resins, and polyester resins. The wax is polyolefin wax having a melting point that is 100 °C or more and 145 °C or less and an average particle size that is 3.0 $\mu$m or less. The film has a specified distribution of the wax. coating weight of the film per side is 0.3 g/m$^2$ or more.

*FIG. 3*

EP 4 512 616 A1

Processed by Luminess, 75001 PARIS (FR)

**Description**

TECHNICAL FIELD

The present disclosure relates to a coated steel sheet, and in particular to a coated steel sheet having excellent press formability. Further, the present disclosure relates to a method of producing the coated steel sheet.

BACKGROUND

Steel sheets, such as cold-rolled steel sheets and hot-rolled steel sheets, are widely used in various fields. For example, in applications such as use in automobile bodies, steel sheets are typically used after press forming. Accordingly, steel sheets are required to have excellent press formability.

Especially in recent years, there is a trend toward press forming into more complex shapes to improve product design. Further, in order to simplify production processes, there is a trend towards integrating components, and in this sense also, there is a trend towards steel sheets being press-formed into more complex shapes.

However, when a steel sheet is press-formed into a complex shape, the steel sheet may be unable to withstand forming, and fracturing may occur, or die galling may occur during continuous press forming. As a result, the productivity of products such as automobiles may be seriously adversely affected. Accordingly, there is a demand for further improvement in press formability.

One example of a method to improve press formability is to apply a surface treatment to the press die used for press forming. While this is a widely used method, once a surface treatment is applied, the press die cannot be adjusted thereafter. Another problem is the high cost.

One method to improve press formability without applying a surface treatment to the press die is to use high-viscosity lubricant. However, high-viscosity lubricant becomes attached to press-formed members obtained by this method, and therefore degreasing failure may occur after press forming, and when degreasing failure occurs, coatability degrades.

Accordingly, instead of press die surface treatment or high-viscosity lubricant application, there is a demand for improvement in press formability of the steel sheet itself.

As a technique to improve press formability of the steel sheet itself, forming a lubricating film on a steel sheet surface by applying a surface treatment has been proposed.

For example, in Patent Literature (PTL) 1, a coated steel sheet is proposed that includes an acrylic resin film formed on a surface of a galvanized steel sheet.

In PTL 2, it is proposed that in a coated metal sheet including a resin film formed on a surface of a metal sheet, a solid lubricant is made to protrude 0.01 $\mu$m to 1.5 $\mu$m from a surface of the resin film.

In PTL 3, covering a surface of a metal product with 0.5 $\mu$m to 5 $\mu$m of a film of polyurethane resin containing a lubricant is proposed.

In PTL 4, a coated steel sheet is proposed that includes an alkalisoluble organic film with a lubricant added in epoxy resin.

CITATION LIST

Patent Literature

PTL 1: JP H09-170059 A
PTL 2: JP H10-052881 A
PTL 3: JP 2000-309747 A
PTL 4: JP 2000-167981 A

SUMMARY

(Technical Problem)

Although a certain improvement in lubricity could be seen in the technologies proposed in PTL 1 to PTL 4 due to the effect of lubricant contained in a film, formability in complex press forming was not always sufficient. Specifically, there were problems with cracks occurring at sites at risk of cracking during press forming, and die galling occurring at sites where surface pressure was high.

In view of these circumstances, it would be helpful to provide a coated steel sheet that has excellent press formability.

(Solution to Problem)

The inventors focused on coated steel sheets including film containing organic resins and waxes, and as a result of extensive research to solve the problems described above, the inventors made the following discoveries.

(1) When a steel sheet coated with a film containing organic resin and wax is press-formed, the film is scraped off by the press die when the film surface slides against the press die surface, and the lubricating film in which organic resin and wax is mixed coats the sliding surfaces of the press die surface and the steel sheet. Therefore, to improve press formability, it is necessary to improve a sliding property of the lubricating film covering the sliding surfaces of the press die surface and the steel sheet, that is, decreasing the frictional coefficient is required.
(2) By using specified organic resin and wax, and by controlling the coating weight of the film and the distribution of wax on the surface of the film, the frictional coefficient can be remarkably decreased.

The present disclosure is based on the discoveries described above, and primary features of the present disclosure are as described below.

1. A coated steel sheet comprising a base steel sheet and, on at least one side of the base steel sheet, a film containing organic resin and wax, wherein

the organic resin is at least one selected from the group consisting of acrylic resins, epoxy resins, urethane resins, phenolic resins, vinyl acetate resins, and polyester resins,
the wax is polyolefin wax having a melting point that is 100 °C or more and 145 °C or less and an average particle size that is 3.0 $\mu$m or less,
the film has a distribution of the wax with a value of $\sigma^2$ defined by Expression (1) below that is 1.0 or less and a value of M defined by Expression (2) below that is 130 or less,
coating weight of the film per side is 0.3 g/m$^2$ or more,

[Math. 1]

$$\sigma^2 = \frac{1}{m^2} \sum_i \frac{(S_i - m)^2}{N} \qquad (1)$$

[Math. 2]

$$M = \frac{m}{\frac{4}{3}\pi r^3} \qquad (2)$$

where

$\sigma^2$ is variance normalized by average area of Voronoi polygons obtained by Voronoi partitioning for the distribution of the wax on a surface of the film,
$S_i$ is area in $\mu$m$^2$ of the Voronoi polygons,
m is the average area in $\mu$m$^2$ of the Voronoi polygons,
N is total number of the Voronoi polygons,
M is the average area of the Voronoi polygons normalized by volume per particle of the wax, per $\mu$m, and
r is average radius in $\mu$m of the wax.

2. The coated steel sheet according to 1, above, wherein

the proportion of the organic resin in the film is 30 mass% or more and 95 mass% or less, and

the proportion of the wax in the film is 5 mass% or more and 50 mass% or less.

3. The coated steel sheet according to 1 or 2, above, wherein arithmetic mean roughness Ra of a surface of the base steel sheet is 0.4 $\mu$m or more and 2.5 $\mu$m or less.

4. The coated steel sheet according to any one of 1 to 3, above, wherein the coating weight of the film per side is 2.5 g/m$^2$ or less.

5. The coated steel sheet according to any one of 1 to 4, above, wherein the organic resin is an alkali soluble resin.

6. The coated steel sheet according to any one of 1 to 5, above, wherein the film further contains a rust inhibitor.

7. The coated steel sheet according to 6, above, wherein the rust inhibitor is at least one selected from the group consisting of aluminum salts of phosphates, zinc salts, and zinc oxide.

8. The coated steel sheet according to any one of 1 to 7, above, wherein the film further contains a dispersant.

9. The coated steel sheet according to 8, above, wherein the dispersant is at least one selected from the group consisting of sodium polycarboxylate, sodium polyacrylate, carboxylic acid copolymers, and sulfonic acid copolymers.

10. The coated steel sheet according to any one of 1 to 9, above, wherein the film further contains silica.

11. A method of producing the coated steel sheet according to any one of 1 to 10, above, the method comprising applying a film material containing organic resin and wax to at least one side of a base steel sheet and drying, wherein

the organic resin is at least one selected from the group consisting of acrylic resins, epoxy resins, urethane resins, phenolic resins, vinyl acetate resins, and polyester resins,
and the wax is polyolefin wax having a melting point that is 100 °C or more and 145 °C or less and an average particle size that is 3.0 $\mu$m or less.

12. The method of producing the coated steel sheet according to 11, above, wherein the maximum arrival temperature of the base steel sheet at the time of the drying is 60 °C or more and the melting point of the wax or less.

13. The method of producing the coated steel sheet according to 11 or 12, above, wherein the proportion of total solid content in the film material is 1 mass% or more and 30 mass% or less.

(Advantageous Effect)

According to the present disclosure, the frictional coefficient between steel sheet and press die can be remarkably decreased. As a result, according to the present disclosure, press forming is possible without cracks occurring even at sites prone to cracking during press forming. Further according to the present disclosure, die galling at sites with high surface pressure can be suppressed. Accordingly, the coated steel sheet of the present disclosure has extremely good press formability and is suitable for forming into complex shapes.

BRIEF DESCRIPTION OF THE DRAWINGS

In the accompanying drawings:

FIG. 1 is an example of a scanning electron microscope image used to evaluate wax distribution;
FIG. 2 is an example of a scanning electron microscope image used to evaluate wax distribution;
FIG. 3 is a Voronoi diagram obtained by Voronoi partitioning using the SEM image in FIG. 1;
FIG. 4 is a Voronoi diagram obtained by Voronoi partitioning using the SEM image in FIG. 2;
FIG. 5 is a schematic front view illustrating a frictional coefficient measuring apparatus; and
FIG. 6 is a schematic perspective view of shape and dimensions of the bead in FIG. 5.

DETAILED DESCRIPTION

The following describes embodiments of the present disclosure. Hereinafter, "%" as a unit of content represents "mass%" unless otherwise specified.

(1) Coated steel sheet

The coated steel sheet according to an embodiment of the present disclosure includes a base steel sheet and a film on at least one side of the base steel sheet.

[film]

The film contains organic resin and wax. Each of the components is described below.

(Organic resin)

According to the present disclosure, the organic resin serves as a binder that holds the wax on a surface of the steel sheet. Inorganic binders have low affinity with polyolefins and therefore cannot provide a sliding property imparting effect by forming a lubricating film. Therefore, it is important that the film contains the organic resin.

As the organic resin, at least one resin is used, selected from the group consisting of acrylic resins, epoxy resins, urethane resins, phenolic resins, vinyl acetate resins, and polyester resins. Two or more resins may be mixed together as the organic resin.

Any acrylic resin can be used as the acrylic resin without any particular limitation. Here, an acrylic resin is a polymer containing at least one monomer unit selected from the group consisting of (meth)acrylic acid and (meth)acrylic ester.

The acrylic resin preferably further contains styrene as a monomer unit. Acrylic resin containing styrene as a monomer unit has excellent water resistance, which results in good rust resistance. Further, an even better sliding property can be obtained than when styrene is not included.

Any epoxy resin can be used as the epoxy resin without any particular limitation. As the epoxy resin, examples include bisphenol A epoxy resin, bisphenol F epoxy resin, and novolac epoxy resin.

Any urethane resin can be used as the urethane resin without any particular limitation. As the urethane resin, a urethane resin having a carboxy group in the molecule is preferably used.

Any phenolic resin can be used as the phenolic resin without any particular limitation. As the phenolic resin, a resol phenolic resin that can be dissolved or dispersed in an aqueous solvent is preferably used.

Any vinyl acetate resin can be used as the vinyl acetate resin without any particular limitation. As the vinyl acetate resin, a polyvinyl acetate is preferably used.

Any polyester resin can be used as the polyester resin without any particular limitation. As the polyester resin, a polyester resin that contains a monomer having a carboxy group as a component is preferably used.

From the viewpoint of film removability, the organic resin is preferably an alkali soluble resin. That is, when a steel sheet is used for an automobile body or the like, the steel sheet is further coated after press forming. In this case, when the organic resin is an alkali soluble resin, the film can be removed (de-filmed) in an alkali film-removal process performed before subsequent film. Thus, subsequent film can be performed well.

The film can contain the organic resin in any proportion. However, when the proportion of the organic resin is excessively low, the effect of components other than the organic resin increases, and the effect of the organic resin is relatively decreases. Therefore, from the viewpoint of enhancing the effect of the organic resin, the proportion of the organic resin in the film is preferably 30 % or more. By setting the proportion of the organic resin to 30 % or more, the effect of improving press formability can be further enhanced, and the effects of the organic resin, such as film removability and adhesion, can be sufficiently exhibited. The proportion of the organic resin in the film is preferably 40 % or more. The proportion of the organic resin in the film is more preferably 50 % or more. On the other hand, an upper limit of the proportion of the organic resin is also not particularly limited. In order to add some amount of the wax, as described below, the proportion of the organic resin is preferably 95 % or less. The proportion of the organic resin is more preferably 90 % or less.

Here, the proportion of the organic resin in the film is defined as the ratio of the mass of the solid content of the organic resin in the film to the total mass of all the solid content in the film.

Mass-average molecular mass of the organic resin is not particularly limited. However, when the mass-average molecular mass is less than 5000, rust resistance may be inferior. Therefore, from the viewpoint of rust resistance, the mass-average molecular mass of the organic resin is preferably 5000 or more. The mass-average molecular mass of the organic resin is more preferably 7000 or more. The mass-average molecular mass of the organic resin is even more preferably 9000 or more. On the other hand, when the mass-average molecular mass of the organic resin exceeds 30,000, adhesion may degrade. Therefore, from the viewpoint of adhesion, the mass-average molecular mass of the organic resin is preferably 30,000 or less. The mass-average molecular mass of the organic resin is more preferably 25,000 or less. The mass-average molecular mass of the organic resin is even more preferably 20,000 or less.

Here, mass-average molecular mass of the organic resin is the mass-average molecular mass measured in accordance with Japanese Industrial Standard JIS K 7252 "Plastics - Determination of average molecular mass and molecular mass distribution of polymers using size-exclusion chromatography".

(Wax)

Polyolefin wax is used as the wax. Polyolefin wax has a low surface energy and a self-lubricating property.

Therefore, excellent press formability can be obtained by providing a film containing polyolefin wax on a surface of the base steel sheet. Further, the melting point of polyolefin can be adjusted relatively easily to a range described below by controlling density and molecular mass. Among polyolefin waxes, polyethylene wax is preferred because it provides the greatest lubrication effect.

Melting point: 100 °C to 145 °C

The melting point of the polyolefin wax is 100 °C or more and 145 °C or less. As mentioned above, polyolefin wax has a self-lubricating property. In addition, when the melting point of the polyolefin wax is in the range above, the polyolefin wax becomes semi-molten due to frictional heat from sliding against the press die during press forming, and a lubricating film mix of the organic resin and the wax coats the sliding surfaces of the press die and the steel sheet. As a result, direct contact between the press die and the steel sheet is inhibited, resulting in a remarkable improvement in press formability.

When the melting point of the polyolefin wax is less than 100 °C, the polyolefin wax melts completely due to frictional heat from sliding during press forming, and therefore the lubricating effect of the polyolefin wax is not fully exhibited and the press die film effect is not obtained. The melting point of the polyolefin wax is therefore 100 °C or more. The melting point of the polyolefin wax is preferably 120 °C or more. On the other hand, when the melting point of the polyolefin wax is more than 145 °C, the polyolefin wax does not melt due to frictional heat during press forming, and therefore sufficient lubrication cannot be obtained, and the press die film effect is also not obtained. The melting point of the polyolefin wax is therefore 145 °C or less. The melting point of the polyolefin wax is preferably 140 °C or less.

Here, the melting point of the polyolefin wax is defined as the melting temperature measured in accordance with JIS K 7121 "Testing methods for transition temperatures of plastics".

Average particle size: 3.0 $\mu$m or less

When the average particle size of the polyolefin wax is larger than 3.0 $\mu$m, the polyolefin wax is more likely to agglomerate in the film and the desired wax distribution described below cannot be obtained. In addition, it is difficult for the organic resin and the wax to mix when sliding against the press die during press forming, and the press die film effect cannot be obtained, and therefore excellent press formability cannot be obtained. The average particle size of the polyolefin wax is therefore 3.0 $\mu$m or less. The average particle size of the polyolefin wax is preferably 1.5 $\mu$m or less. The average particle size of the polyolefin wax is more preferably 0.5 $\mu$m or less. The average particle size of the polyolefin wax is even more preferably 0.3 $\mu$m or less. On the other hand, a lower limit of the average particle size of the polyolefin wax is not particularly limited, but when excessively small, the polyolefin wax may dissolve in the lubricant during press forming, decreasing the lubricity-enhancing effect. Further, the polyolefin wax becomes more likely to agglomerate in the film material, resulting in low film material stability, and the desired wax distribution may be difficult to obtain. The average particle size of the polyolefin wax is therefore preferably 0.01 $\mu$m or more. The average particle size of the polyolefin wax is more preferably 0.03 $\mu$m or more.

Here, the average particle size can be measured by observing wax particles on the surface of the film using a scanning electron microscope (SEM). That is, the average particle size can be determined by acquiring SEM images set at a magnification corresponding to the particle size of the wax and analyzing the images. The average of the circle equivalent diameter of each wax particle determined by the image analysis is taken as the average particle size. The conditions for observation by SEM may be the same as for the measurement of $\sigma^2$ and M, as described below.

The film may contain the wax in any proportion. However, when the proportion of the wax in the film is excessively high, the proportion of the organic resin as a binder is relatively low, and the wax component tends to detach. Further, adhesion is decreased. In addition, when subsequent film is to be applied, the film may not be sufficiently removed from the steel sheet surface in the alkali degreasing process, resulting in insufficient degreasing, which may degrade coatability. The proportion of the wax in the film is therefore preferably 50 % or less. The proportion of the wax in the film is more preferably 30 % or less.

On the other hand, a lower limit of the proportion of the wax is not particularly limited. The proportion of the wax in the film is preferably 5 % or more. The reasons for this are as follows. Assuming the wax particles tend to disperse when the film is formed on the steel sheet, the distance between adjacent wax particles increases as the proportion of the wax in the film decreases, but the value will be equivalent among the wax particles, and therefore the variance in the area of the Voronoi polygons will not change. Accordingly, the variance in the area of the Voronoi polygons remains in a suitable range. However, when the proportion of the wax in the film is less than 5 %, the value of M, described below, increases and may adversely affect press formability. The proportion of the wax in the film is therefore 5 % or more. The proportion of the wax in the film is more preferably 10 % or more.

Here, the proportion of the wax in the film is defined as the ratio of the mass of the solid content of the wax in the film to the total mass of all the solid content in the film.

(Wax distribution)

The inventors fabricated coated steel sheets having a wide range of coating weights of film containing organic resin and wax on steel sheet surfaces having various surface roughness values, and applied Voronoi partitioning to evaluate the effect on press formability of wax distribution on the film surface. As a result, the inventors found that excellent press formability can be obtained when the film has a specific wax distribution. The following describes this finding.

First, Voronoi partitioning divides a region in which multiple points (sites) are located arbitrarily on a metric space according to which other points on the same metric space are closest. A diagram divided into regions by such Voronoi partitioning is called a Voronoi diagram. In the two-dimensional plane, boundaries of the Voronoi partitioning are perpendicular bisectors between adjacent sites, and each partitioned region bounded by such perpendicular bisectors is called a Voronoi polygon.

The inventors performed Voronoi partitioning by drawing perpendicular bisectors between adjacent wax particles using the positions of wax particles observed in a certain field of view of the film surface as the sites, and the partitioned regions of the wax particles were defined as the Voronoi polygons of the wax.

The Voronoi polygons of the wax are each a polygon bounded by the perpendicular bisectors between adjacent wax particles, the area of which reflects the distance between adjacent wax particles. Therefore, the variance in the area of the Voronoi polygons of the wax reflects the variation in the distance between adjacent wax particles, and the size of this variance can be used to evaluate the distribution of the wax. For example, when wax particles tend to agglomerate, the distance between adjacent wax particles inside the wax particle agglomerations is smaller and the area of each Voronoi polygon of the wax is smaller. Outside of the wax particle agglomerations, the distance between adjacent wax particles is larger, and the area of each Voronoi polygon of the wax is larger. As a result, the variance in the area of the Voronoi polygons of the wax is larger. On the other hand, when the wax is uniformly distributed, the distance between adjacent wax particles is equivalent for each wax particle, and the area of the Voronoi polygons of the wax is equivalent for each wax particle, resulting in a smaller variance in the area of the Voronoi polygons of the wax.

Therefore, the distribution of the wax on the surface of the film was evaluated using the values of $\sigma^2$ and M. Here, $\sigma^2$ is the variance of the area of the Voronoi polygons of the wax, normalized (normalized variance), as defined in Expression (1) below. Further, M is the average area M of the Voronoi polygons normalized by the volume determined from the average radius of one wax particle, as defined in Expression (2) below. As a result, the inventors found that the press formability of the coated steel sheet is remarkably improved when the values of $\sigma^2$ and M satisfy the defined conditions.

[Math. 3]

$$\sigma^2 = \frac{1}{m^2} \sum_i \frac{(S_i - m)^2}{N} \qquad (1)$$

[Math. 4]

$$M = \frac{m}{\frac{4}{3}\pi r^3} \qquad (2)$$

Here,

$\sigma^2$ is variance normalized by average area of Voronoi polygons obtained by Voronoi partitioning for the distribution of the wax on a surface of the film,
$S_i$ is area in $\mu m^2$ of the Voronoi polygons,
m is the average area in $\mu m^2$ of the Voronoi polygons,
N is total number of the Voronoi polygons,
M is the average area of the Voronoi polygons normalized by volume per particle of the wax, per $\mu m$, and
r is average radius in $\mu m$ of the wax.

$\sigma^2$: 1.0 or less, M: 130 or less

When $\sigma^2$ is 1.0 or less and M is 130 or less, the wax distribution of the film surface is uniform and there is enough wax in the film to exhibit a lubricating effect. Accordingly, when the press die surface and the film on the steel sheet surface come into contact and slide, a lubricating film having an almost uniform mixture of the wax coats the sliding surfaces of the press die surface and the steel sheet, and improved sliding property (lower frictional coefficient) and excellent press formability can be obtained.

Conversely, when $\sigma^2$ exceeds 1.0, the wax distribution on the film surface becomes non-uniform. That is, wax agglomerated portions where wax particles agglomerate and wax deficient portions with low wax content and insufficient lubrication effect are formed on the film surface. In wax agglomerated portions, sliding property is improved because there are more wax particles, but in wax deficient portions, sliding property is decreased because the amount of wax is small. Accordingly, film with poor lubrication effect comes into contact with the press die at the wax deficient portion, resulting in an increase in the frictional coefficient and a decrease in press formability. Further, when the value of M exceeds 130, then even when the wax distribution is uniform, the amount of wax in the film is insufficient and the sliding property of the lubricating film covering the sliding surfaces of the press die surface and the steel sheet will decrease, and the desired press formability cannot be obtained.

For the above reasons, $\sigma^2$ is 1.0 or less. $\sigma^2$ is preferably 0.85 or less. $\sigma^2$ is more preferably 0.75 or less. Further, M is 130 or less. M is preferably 60 or less. M is more preferably 45 or less.

On the other hand, a lower limit of $\sigma^2$ is not particularly limited, and may be, for example, 0.1 or more, or 0.2 or more. A lower limit of M is also not particularly limited, but may be, for example, 5 or more, or 10 or more. When M is less than 5, then even when the wax distribution is uniform, the amount of wax in the film is excessive and the film removability of the film is decreased.

$\sigma^2$ and M can be measured by observing wax particles on the surface of the film using a scanning electron microscope (SEM). That is, $\sigma^2$ and M are measured by acquiring SEM images set to a magnification corresponding to the particle size of the wax, specifying positions of wax particles, and performing Voronoi partitioning.

The following is a specific description of how $\sigma^2$ and M are measured using a SEM. When measuring $\sigma^2$ and M using a SEM, the accelerating voltage needs to be low enough to suppress spreading and transmission of the electron beam and to obtain information on the wax distribution in the vicinity of the film surface. For this reason, it is preferable to measure at an accelerating voltage of 1 kV or less. Further, in order to prevent image damage due to charging during observation and to clearly identify wax particles, film with a conductive substance such as C, Au, Os, or the like is preferred. The thickness of the film with the conductive substance is preferably 2 nm or less. The measurement range of the SEM image needs to be such that wax particles can be identified and that a statistically significant number of wax particles are included. For example, when the wax particles are 100 nm to 300 nm in diameter, the pixel size is preferably 30 nm or less and the measurement range is preferably 10 $\mu$m $\times$ 10 $\mu$m or more. The SEM images may be acquired by measuring multiple fields of view, either continuously or arbitrarily, so that the total measurement range described above is satisfied.

After acquiring the SEM images, the positions of the wax particles in the SEM image are specified. The positions may be specified by the naked eye or using image processing software, for example. Next, Voronoi polygons are drawn by performing Voronoi partitioning using the specified wax particle positions as the sites. Voronoi polygons may be drawn manually or using image processing software, for example. The area of the Voronoi polygons: $S_i$ ($\mu$m$^2$), the average area of the Voronoi polygons: m ($\mu$m$^2$), the total number of Voronoi polygons: N, and the average radius of the wax particles: r ($\mu$m) are then determined.

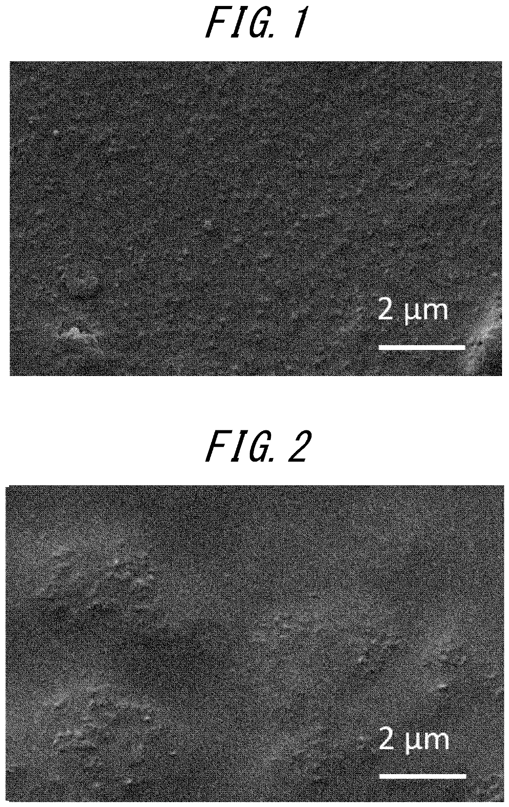

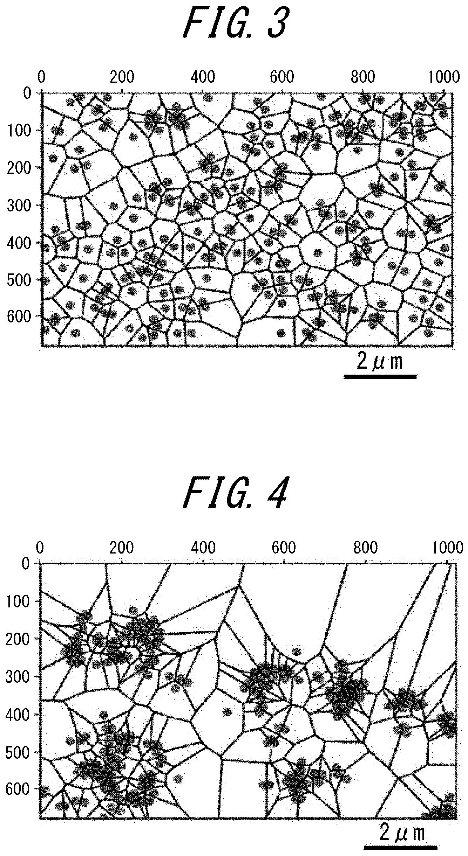

FIG. 1 and FIG. 2 are SEM images obtained by SEM observation of wax distribution at 10,000$\times$ magnification. FIG. 1 is a case where the wax distribution is close to uniform, and FIG. 2 is a case where the wax distribution is non-uniform (wax agglomerated and deficient portions are mixed). FIG. 3 and FIG. 4 are Voronoi diagrams obtained by Voronoi partitioning using the SEM images in FIG. 1 and FIG. 2, respectively. The value of $\sigma^2$ for FIG. 1 was 0.32 and the value of M was 26.6, while the value of $\sigma^2$ for FIG. 2 was 3.91 and the value of M was 25.2.

[Rust inhibitor]

The film does not rust under normal storage conditions even when a rust inhibitor is not included. However, from the viewpoint of further improving rust resistance, the film preferably further contains a rust inhibitor.

Any rust inhibitor may be used without particular limitation. As the rust inhibitor, preferably at least one selected from the group consisting of aluminum salts of phosphoric acids, zinc salts, and zinc oxide is used. Here, phosphoric acids include orthophosphoric acid as well as condensed phosphoric acids such as pyrophosphoric acid, tripolyphosphoric acid, tetrapolyphosphoric acid, and metaphosphoric acid. The use of such a rust inhibitor exhibits an even better rust protection effect and degradation of film material stability is small.

Rust inhibitor content, or proportion in the film, is not particularly limited, but when the rust inhibitor content is excessively low, a sufficient effect may not be obtained. In particular, when the coated steel sheets are stored in a coiled and stacked state, rust is likely to occur due to moisture absorption. From the viewpoint of helping prevent rust formation even in such a harsh environment, the proportion of the rust inhibitor in the film is preferably 5 % or more. On the other hand, when the proportion of rust inhibitor in the film exceeds 30 %, adhesion may degrade. Further, the rust inhibitor may precipitate while in a film material state, degrading film material stability. Therefore, the proportion of the rust inhibitor in the film is preferably 30 % or less.

Here, the proportion of the rust inhibitor in the film is defined as the ratio of the mass of the rust inhibitor in the film to the total mass of all the solid content in the film.

[Dispersant]

From the viewpoint of improving dispersibility of the film components, the film preferably further contains a dispersant. Any dispersant may be used as the dispersant without particular limitation. An anionic polymeric dispersant is preferably used as the dispersant. In addition to being particularly effective in improving the dispersibility of particles that are some $\mu$m or smaller, anionic polymeric dispersant can adsorb onto polyolefin wax. As the anionic polymeric dispersant, it is preferable to use at least one selected from the group consisting of sodium polycarboxylate, sodium polyacrylate, carboxylic acid copolymers, and sulfonic acid copolymers.

The proportion of the dispersant in the film is not particularly limited. The proportion of the dispersant in the film is preferably 0.5 % or more. The proportion of the dispersant being 0.5 % or more in the film improves the dispersibility of wax in the film material and the uniformity of wax distribution in the resulting film. As a result, the desired wax distribution is easier to achieve and press formability is further improved. On the other hand, when the proportion of the dispersant in the film exceeds 5 %, adhesion may degrade. Therefore, the proportion of dispersant in the film is preferably 5 % or less.

Here, the proportion of the dispersant in the film is the ratio of the mass of the dispersant in the film to the total mass of all the solid content in the film.

(Silica)

From the viewpoint of improving water repellency and rust resistance of the film, the film preferably further contains silica. Further, the presence of silica suppresses precipitation of the rust inhibitor in the film material, thus improving film material stability.

Any silica may be used as the silica without any particular limitation. Colloidal silica is preferably used as the silica. The average particle size of the colloidal silica is not particularly limited. The average particle size of the colloidal silica is preferably 5 nm or more. Further, the average particle size of the colloidal silica is preferably 200 nm or less. The average particle size of the colloidal silica can be measured by dynamic light scattering. Specifically, first, particle size distribution on a scattering intensity basis is measured by dynamic light scattering. The particle size distribution is then converted from a scattering intensity basis to a volume basis. The obtained median size D50 in the volume-based particle size distribution is the average particle size of the colloidal silica.

The proportion of the silica in the film is preferably 1 % or more. By making the proportion of the silica in the film 1 % or more, water repellency of the film is increased and rust resistance is further improved. On the other hand, when the proportion of the silica in the film exceeds 10 %, adhesion may degrade. Therefore, the proportion of the silica in the film is preferably 10 % or less.

Here, the proportion of the silica in the film is the ratio of the mass of the silica in the film to the total mass of all the solid content in the film.

The proportion of each component in the film can be calculated from the solid mass of each film component at the time of film material formulation.

In addition to the organic resin, the wax, the rust inhibitor, the dispersant, and the silica, the film may contain any other component. Examples of "any other component" include surface adjusters, defoamers, and the like that are typically added to film material.

coating weight: 0.3 g/m$^2$ or more

When the coating weight of the film is less than 0.3 g/m$^2$, wax agglomeration is likely to occur between the application of the film material to form the film and drying, and therefore the desired wax distribution cannot be obtained, resulting in decreased press formability. Therefore, the coating weight of the film per side is 0.3 g/m$^2$ or more. As described below, the final wax distribution is affected by the surface roughness of the base steel sheet. From the viewpoint of making it easier to obtain the desired wax distribution even when the surface roughness of the base steel sheet is large, the coating weight of the film per side is preferably 0.4 g/m$^2$ or more. The coating weight of the film per side is more preferably 0.6 g/m$^2$ or more. The coating weight per side is even more preferably 0.8 g/m$^2$ or more. On the other hand, an upper limit of the coating weight of the film is not particularly limited, but when exceeding 2.5 g/m$^2$, weldability, film removability, and adhesion may degrade. Therefore, the coating weight of the film per side is preferably 2.5 g/m$^2$ or less.

The coating weight of the film can be determined by removing the film from the coated steel sheet and dividing the mass difference before and after the film removal by the area of the steel sheet. The removal of the film can be done by any method that can remove only the film without damaging the base steel sheet. Typically, a solvent (such as an organic solvent) that can dissolve the organic resin of the film or a separating agent containing the solvent may be used. When the film is alkali soluble, an alkali degreaser is preferably used, as described in the EXAMPLES section.

[Base steel sheet]

As mentioned above, according to the present disclosure, excellent press formability is realized by controlling the composition of the film and the distribution of the wax in the film. Accordingly, any steel sheet may be used as the base steel sheet without particular limitation. The base steel sheet may be either a cold-rolled steel sheet or a hot-rolled steel sheet.

Tensile strength TS of the base steel sheet is not particularly limited, but when excessively low, the strength of the final press-formed member may be insufficient. Accordingly, tensile strength of the base steel sheet is preferably 260 MPa or more. On the other hand, an upper limit of tensile strength is also not particularly limited. For example, when a high strength steel sheet having tensile strength of 440 MPa or more is used as the base steel sheet, surface pressure during press forming is higher. However, according to the present disclosure, the frictional coefficient between the steel sheet and a press die can be remarkably decreased, and therefore even under such a condition of high surface pressure, cracking and die galling can be suppressed and good press formability can be obtained. Accordingly, tensile strength of the base steel sheet may be 440 MPa or more. However, excessively high tensile strength makes press forming into complex shapes difficult. Therefore, from the viewpoint of press formability into complex shapes, tensile strength of the base steel sheet is preferably 440 MPa or less.

Thickness of the base steel sheet is not particularly limited, but when excessively thin, strength of the final press-formed member may be insufficient. Thickness of the base steel sheet is therefore preferably 0.5 mm or more. On the other hand, an upper limit of thickness is not particularly limited, but when excessively thick, press forming into complex shapes becomes difficult. Thickness of the base steel sheet is therefore preferably 4.0 mm or less.

Surface roughness of the base steel sheet (surface roughness of the base steel sheet before film formation) is not particularly limited. However, when arithmetic mean roughness Ra of the base steel sheet surface is greater than 2.5 μm, the film formed in recessed portions is less likely to contact the press die during press forming because of the large surface roughness of the base steel sheet. Further, convex portions have less coating weight of the film than recessed portions, which makes it difficult to obtain the desired wax distribution, and as a result, the press formability improvement effect may be decreased. Therefore, from the viewpoint of further improving press formability, Ra is preferably 2.5 μm or less. On the other hand, when Ra is smaller than 0.4 μm, fine scratches that may occur during press forming are easily noticeable. Further, when Ra is smaller than 0.4 μm, galling may occur during press forming. Therefore, Ra is preferably 0.4 μm or more.

Here, arithmetic mean roughness Ra of the base steel sheet can be measured according to JIS B 0633:2001 (ISO 4288:1996). For example, when Ra is greater than 0.1 and 2 or less, Ra is determined from a roughness curve measured with a cutoff value and reference length as 0.8 mm and an evaluation length as 4 mm. When Ra is greater than 2 and 10 or less, Ra is determined from a roughness curve measured with a cutoff value and reference length as 2.5 mm and an evaluation length as 12.5 mm.

(2) Production method

Next, a method of producing the coated steel sheet of the present disclosure is described. According to an embodiment of the present disclosure, the coated steel sheet is produced by applying a film material containing the organic resin and the wax to at least one side of the base steel sheet and drying. Points not specifically mentioned can be the same as in the above description of the coated steel sheet.

The film material can be, for example, an organic resin solution in which the organic resin is dissolved in a solvent or an organic resin emulsion in which the organic resin is dispersed in a solvent, to which wax is added. One or both of water and organic solvent can be used as the solvent, but use of water is preferred.

The proportion of total solid content in the film material is not particularly limited. The proportion of total solid content in the film material is preferably from 1 % to 30 %. When the proportion of total solid content in the film material is less than 1 % or more than 30 %, the film may be uneven and the desired wax distribution may not be obtained. The proportion of total solid content in the film material is the concentration of total solid content in the film material, that is, the ratio of the mass of solid content to the total mass of the film material (including solvent).

Application of the film material to the base steel sheet can be performed by any method without particular limitation. Examples of application include the use of roll coaters and bar coaters, as well as spray, dip, and brush application methods. In the application, the film material is applied so that in the final coated steel sheet, the coating weight per side of the steel sheet is 0.3 g/m$^2$ or more by dry mass.

Drying after the film material is applied can also be done by any method without particular limitation. Examples of drying methods include drying by hot blast, drying by induction heater, and infrared heating.

The maximum arrival temperature of the steel sheet during drying is preferably 60 °C or more and the melting point of the wax used or less. When the maximum arrival temperature is less than 60 °C, drying takes longer and rust resistance may be inferior. On the other hand, when the maximum arrival temperature exceeds the melting point of the wax, the wax melts and coalesces, resulting in coarsening of the particle size, making obtaining the desired wax distribution difficult.

EXAMPLES

The following Examples are illustrative of the present disclosure. However, the present disclosure is not limited to the following Examples.

The following procedure was used to form films on surfaces of base steel sheets to produce coated steel sheets.

First, four types of base steel sheets having the values for arithmetic mean roughness Ra listed in Table 1 were prepared. Among them, the base steel sheets A to C were cold-rolled steel sheets each having a thickness of 0.8 mm, and the base steel sheets D were hot-rolled steel sheets each having a thickness of 2.0 mm. The base steel sheets A to D were all SPCD (JIS G 3141) and SPHD (JIS G 3131) having 270 MPa grade tensile strength.

Further, film material having the compositions listed in Tables 2 and 3 was prepared. The proportion of each component in Tables 2 and 3 was the ratio of the mass of solid content of each component to the total mass of all solid content in the film material. Colloidal silica having a volume average particle size of 9 nm was used as the silica. The molecular mass of the organic resins and the melting points and average particle sizes of the wax listed in Tables 2 and 3 were values measured by the methods described previously.

The film material was applied to surfaces of the base steel sheets using a bar coater and dried by heating using an IH heater so that the maximum arrival temperatures at the surfaces of the steel sheets was 80 °C to obtain the coated steel sheets. The combinations of the base steel sheets and the film material used were as listed in Tables 4 to 7. For comparison, in some of the Comparative Examples, no film formation was performed and the base steel sheet was evaluated in the evaluation described below.

(coating weight)

coating weight of the film on the obtained coated steel sheets was measured. Specifically, in each case, the film was removed from the coated steel sheet, and the difference in mass before and after the removal of the film was divided by the area of the steel sheet to determine the coating weight. Removal of the film was performed by immersing the coated steel sheet for 300 s in a degreasing solution having a degreaser concentration of 20 g/L and a temperature of 40 °C. Fine Cleaner E6403 (produced by Nihon Parkerizing Co., Ltd.), an alkaline degreaser, was used as the degreaser. The complete removal of the film under the above conditions was confirmed by the same method as in the test for film removability described separately below. The coating weights listed in Tables 4 to 7 are per steel sheet side.

(Wax distribution)

Wax distribution on the film surface of the obtained coated steel sheets was then evaluated using the following procedure.

First, from each of the coated steel sheets, five 10 mm square test pieces were cut. For each test piece, an SEM image was obtained by observing an area in the vicinity of the center of the test piece by a SEM. A Schottky field emission SEM (Σigma, produced by Carl Zeiss) was used as the SEM. The observation conditions for the SEM were magnification of 10,000×, accelerating voltage of 1 kV, and resolution of 1024 × 768.

From the SEM images obtained, positions of the wax particles were specified and binarization was performed. According to Voronoi partitioning, the area $S_i$ of the Voronoi polygon corresponding to each wax particle was then determined, and the average area m of the Voronoi polygons was calculated from the total number N of Voronoi polygons. The variance $\sigma^2$ normalized by the average area of the Voronoi polygons was then calculated. Further, volume per wax particle was determined from the average radius r of the wax particles, and the average area M of the Voronoi polygons normalized by the volume per wax particle was calculated.

For each of the five test pieces, $\sigma^2$ and M were calculated using the procedure described above, and the average values of each were used as $\sigma^2$ and M for the coated steel sheet in question. In the Voronoi partitioning described above, when a Voronoi polygon reached the image border without closing, the image border was considered as an edge of the Voronoi polygon in order to prevent overestimation of the area in the image edge region.

Properties of the obtained coated steel sheets were then evaluated using the following procedure.

(Press formability)

Press formability is correlated with sliding property, that is, the frictional coefficient of the steel sheet surface, and the lower the frictional coefficient, the better the press formability. Therefore, to evaluate press formability, frictional coefficient of the obtained coated steel sheets was measured by the following procedure.

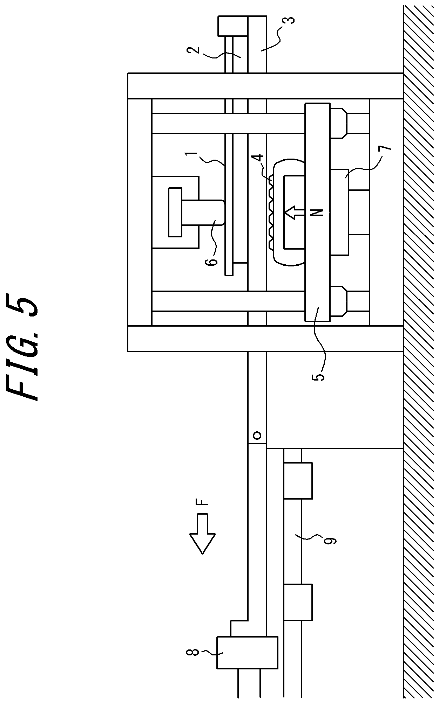

FIG. 5 is a schematic front view illustrating a frictional coefficient measuring apparatus. A sample 1 for frictional coefficient measurement, collected from each coated steel sheet, was fixed on a sample table 2 and the sample table 2 was fixed on the upper surface of a slide table 3 that was slidable in the horizontal direction, as illustrated. A slide table support 5 including rolls 4 and movable in the vertical direction was provided under the slide table 3 such that the rolls 4 were in contact with the lower surface of the slide table 3. A first load cell 7 was attached to the slide table support 5 for measuring a pressing load N on the sample 1 for frictional coefficient measurement via a bead 6 by pushing upward. A second load cell 8 was mounted to one end of the slide table 3 for measuring sliding resistance force F experienced when the slide table 3 was moved in the horizontal direction while the pressing load described above was applied. The test was conducted with Preton R352L, a cleaning oil for presses produced by Sugimura Chemical Industrial Co., Ltd., as a lubricant applied to a surface of the sample 1.

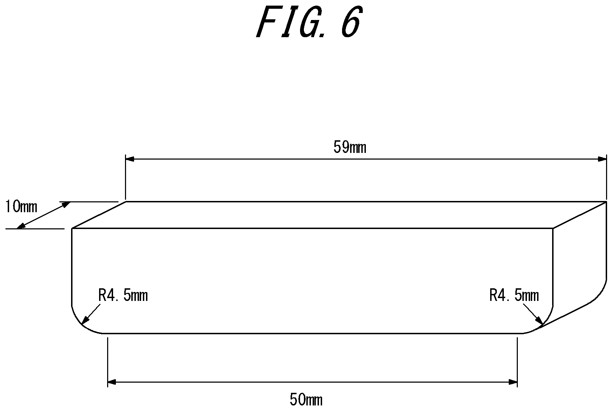

FIG. 6 is a schematic diagram of the bead shape and dimensions used. The sample 1 was slid in a state where the lower surface of the bead 6 was pushed against the surface of the sample 1. The bead 6 illustrated in FIG. 6 has dimensions including width: 10 mm, length in the sliding direction of the sample: 59 mm, and curvature at each lower end-side corner portion in the sliding direction: 4.5 mm R. The lower surface of the bead pushed against the sample is a flat plane having width: 10 mm, and length in the sliding direction of the sample: 50 mm.

The frictional coefficient measurement test was performed using the bead illustrated in FIG. 6, with a pressing load N: 400 kgf and withdrawal rate (horizontal movement speed of the slide table 3) of the sample: 20 cm/min. The frictional coefficient $\mu$ between the sample and the bead was calculated using the expression: $\mu = F/N$.

The obtained frictional coefficient values are listed in Tables 4 to 7. When the frictional coefficient was 0.115 or less, the press formability (sliding property) was judged to be good.

(Weldability)

When a press-formed member obtained by press forming a coated steel sheet is used in an automobile body or the like, welding is typically performed in the assembly process. Therefore, it is desirable for coated steel sheets to have excellent weldability in addition to press formability. Accordingly, weldability of the coated steel sheets was evaluated. Specifically, continuous weldability welding tests were performed on the coated steel sheets under the following conditions: electrode used: DR-type Cr-Cu electrode, electrode force: 150 kgf, weld time: 10 cycles/60 Hz, welding current: 7.5 kA, and continuous number of welding spots was determined. When the continuous number of welding spots was 5000 or more, weldability was evaluated as "good"; when less than 5000, weldability was evaluated as "insufficient".

(Film removability)

Assuming that the coated steel sheet according to the present disclosure is to be used in automobile applications, film removability during degreasing was evaluated. To determine film removability, each coated steel sheet was first immersed in a degreasing solution with a degreaser concentration of 20 g/L and a temperature of 40 °C for a defined time, and then degreased by washing with tap water. Fine Cleaner E6403 (produced by Nihon Parkerizing Co., Ltd.), an alkaline degreaser, was used as the degreaser.

Next, surface carbon intensity of the test pieces after degreasing was measured using an X-ray fluorescence spectrometer. Using the measured surface carbon intensity and a pre-measured surface carbon intensity before degreasing and surface carbon intensity of the base steel sheet, a film removal rate was calculated using the following expression.

film peeling rate (%) = [(surface carbon intensity before degreasing - --> surface carbon intensity after degreasing) / (surface carbon intensity before degreasing - surface carbon intensity of base steel sheet)] $\times$ 100

Here, the surface carbon intensity of the base steel sheet is the surface carbon intensity of the base steel sheet before the film is formed.

The above test was conducted while varying the immersion time in the degreasing solution, and the immersion time in the alkali degreasing solution that resulted in a film peeling rate of 98 % or more was determined. The immersion times determined are listed in Tables 4 to 7 as "de-filming time". When the de-filming time was 120 s or less, film removability was considered to be good.

(Rust resistance)

Assuming that the coated steel sheets are stored in a coiled state, rust resistance was evaluated in an overlapped state. Specifically, from each coated steel sheet, a 150 mm $\times$ 70 mm size test piece was taken from the coated steel sheet, and both surfaces of the test piece were coated with anti-rust oil to a coating weight per side of 1.0 g/m$^2$. Two such test pieces were then overlapped and held under load at a surface pressure of 0.02 kgf/mm$^2$ at a temperature of 50 °C and humidity of 95 % RH.

Every 7 days, the inner surfaces of the overlap were checked and evaluated for the number of days before rusting occurred. The evaluation was "excellent" when the number of days until rusting occurred was 56 days or more, "good" when the number of days was 21 days or more, and "acceptable" when the number of days was less than 21 days.

(Adhesion)

When a press-formed member obtained by press forming a coated steel sheet is used in an automobile body or the like, adhesion may be performed in the assembly process. Therefore, it is desirable for coated steel sheets to have excellent adhesion in addition to press formability. Accordingly, adhesion of the coated steel sheets was evaluated. Specifically, two 100 mm $\times$ 25.4 mm size test pieces were taken from each coated steel sheet and immersed in anti-rust oil. After the test pieces were pulled from the anti-rust oil, the test pieces were stood vertically for 24 h to remove excess oil.

Next, an area of 25.4 mm $\times$ 13 mm on the surface of the test piece was uniformly coated with epoxy adhesive to a thickness of 0.2 mm. The two test pieces were then overlapped and clamped together with a clip, and baked at 180 °C for 20 min to dry and harden. After cooling, a shear tensile test was performed using an autograph tester to measure shear adhesive strength. Good adhesion was defined as shear adhesive strength of 20 MPa or more.

As illustrated in Tables 4 to 7, the coated steel sheets satisfying the conditions of the present disclosure all had a frictional coefficient of 0.115 or less and excellent press formability. In contrast, the coated steel sheets that did not satisfy the conditions of the present disclosure all had a frictional coefficient higher than 0.115 and poor press formability.

As described above, the coated steel sheet according to the present disclosure has an excellent sliding property (press formability) when press forming, and can be suitably used for various applications, including automobile body applications.

[Table 1]

Table 1

| Base steel sheet | Ra ($\mu$m) |
|---|---|
| A | 0.48 |
| B | 0.78 |
| C | 1.48 |
| D | 2.35 |

[Table 2]

Table 2

| Film material No. | Organic resin | | | Wax | | | | Dispersant | | Rust inhibitor | | Silica |
|---|---|---|---|---|---|---|---|---|---|---|---|---|
| | Type | Molecular mass | Proportion (mass%) | Type | Melting point (°C) | Average particle size ($\mu$m) | Proportion (mass%) | Type | Proportion (mass%) | Type | Proportion (mass%) | Proportion (mass%) |
| 1 | Styrene acrylic | 10000 | 80 | Polyethylene | 130 | 0.15 | 20 | - | 0 | - | 0 | 0 |
| 2 | Styrene acrylic | 4000 | 80 | Polyethylene | 130 | 0.15 | 20 | - | 0 | - | 0 | 0 |
| 3 | Styrene acrylic | 5000 | 80 | Polyethylene | 130 | 0.15 | 20 | - | 0 | - | 0 | 0 |
| 4 | Styrene acrylic | 30000 | 80 | Polyethylene | 130 | 0.15 | 20 | - | 0 | - | 0 | 0 |
| 5 | Styrene acrylic | 50000 | 80 | Polyethylene | 130 | 0.15 | 20 | - | 0 | - | 0 | 0 |
| 6 | Styrene acrylic | 10000 | 80 | Polyethylene | 90 | 0.2 | 20 | - | 0 | - | 0 | 0 |
| 7 | Styrene acrylic | 10000 | 80 | Polypropylene | 145 | 0.03 | 20 | - | 0 | - | 0 | 0 |
| 8 | Styrene acrylic | 10000 | 80 | Polypropylene | 155 | 0.06 | 20 | - | 0 | - | 0 | 0 |
| 9 | Styrene acrylic | 10000 | 80 | Polyethylene | 132 | 0.5 | 20 | - | 0 | - | 0 | 0 |
| 10 | Styrene acrylic | 10000 | 80 | Polyethylene | 132 | 3.0 | 20 | - | 0 | - | 0 | 0 |
| 11 | Styrene acrylic | 10000 | 80 | Polyethylene | 132 | 60 | 20 | - | 0 | - | 0 | 0 |
| 12 | Styrene acrylic | 10000 | 100 | - | - | - | 0 | - | 0 | - | 0 | 0 |
| 13 | Styrene acrylic | 10000 | 95 | Polyethylene | 120 | 0.06 | 5 | - | 0 | - | 0 | 0 |

| Film material No. | Organic resin | | | Wax | | | | Dispersant | | Rust inhibitor | | Silica |
|---|---|---|---|---|---|---|---|---|---|---|---|---|
| | Type | Molecular mass | Proportion (mass%) | Type | Melting point (°C) | Average particle size ($\mu$m) | Proportion (mass%) | Type | Proportion (mass%) | Type | Proportion (mass%) | Proportion (mass%) |
| 14 | Styrene acrylic | 10000 | 90 | Polyethylene | 120 | 0.06 | 10 | - | 0 | - | 0 | 0 |
| 15 | Styrene acrylic | 10000 | 50 | Polyethylene | 120 | 0.06 | 50 | - | 0 | - | 0 | 0 |
| 16 | Styrene acrylic | 10000 | 40 | Polyethylene | 120 | 0.06 | 60 | - | 0 | - | 0 | 0 |
| 17 | Acrylic | 10000 | 80 | Polyethylene | 130 | 0.15 | 20 | - | 0 | - | 0 | 0 |
| 18 | Styrene acrylic | 10000 | 79.5 | Polyethylene | 130 | 0.15 | 20 | Sodium polycarboxylate | 0.5 | - | 0 | 0 |
| 19 | Styrene acrylic | 10000 | 79 | Polyethylene | 130 | 0.15 | 20 | Sodium polycarboxylate | 1 | - | 0 | 0 |
| 20 | Styrene acrylic | 10000 | 77 | Polyethylene | 130 | 0.15 | 20 | Sodium polycarboxylate | 3 | - | 0 | 0 |

EP 4 512 616 A1

[Table 3]

[Table 3]

Table 3

| Film material No. | Organic resin | | | Wax | | | | Dispersant | | Rust inhibitor | | Silica |
|---|---|---|---|---|---|---|---|---|---|---|---|---|
| | Type | Molecular mass | Proportion (mass%) | Type | Melting point (°C) | Average particle size ($\mu$m) | Proportion (mass%) | Type | Proportion (mass%) | Type | Proportion (mass%) | Proportion (mass%) |
| 21 | Styrene acrylic | 10000 | 75 | Polyethylene | 130 | 0.15 | 20 | Sodium polycarboxylate | 5 | - | 0 | 0 |
| 22 | Styrene acrylic | 10000 | 74 | Polyethylene | 130 | 0.15 | 20 | Sodium polycarboxylate | 6 | - | 0 | 0 |
| 23 | Styrene acrylic | 10000 | 79 | Polyethylene | 130 | 0.15 | 20 | Sodium polyacrylate | 1 | - | 0 | 0 |
| 24 | Styrene acrylic | 10000 | 79 | Polyethylene | 130 | 0.15 | 20 | Carboxylic acid copolymer | 1 | - | 0 | 0 |
| 25 | Styrene acrylic | 10000 | 79 | Polyethylene | 130 | 0.15 | 20 | Sulfonic acid copolymer | 1 | - | 0 | 0 |
| 26 | Epoxy | 10000 | 80 | Polyethylene | 130 | 0.15 | 20 | - | 0 | - | 0 | 0 |
| 27 | Urethane | 10000 | 80 | Polyethylene | 130 | 0.15 | 20 | - | 0 | - | 0 | 0 |
| 28 | Phenol | 10000 | 80 | Polyethylene | 130 | 0.15 | 20 | - | 0 | - | 0 | 0 |
| 29 | Vinyl acetate | 10000 | 80 | Polyethylene | 130 | 0.15 | 20 | - | 0 | - | 0 | 0 |
| 30 | Polyester | 10000 | 80 | Polyethylene | 130 | 0.15 | 20 | - | 0 | - | 0 | 0 |
| 31 | Styrene acrylic | 10000 | 75 | Polyethylene | 130 | 0.15 | 20 | - | 0 | Aluminum tripolyphosphate | 5 | 0 |
| 32 | Styrene acrylic | 10000 | 65 | Polyethylene | 130 | 0.15 | 20 | - | 0 | Aluminum tripolyphosphate | 15 | 0 |
| 33 | Styrene acrylic | 10000 | 50 | Polyethylene | 130 | 0.15 | 20 | - | 0 | Aluminum tripolyphosphate | 30 | 0 |
| 34 | Styrene acrylic | 10000 | 40 | Polyethylene | 130 | 0.15 | 20 | - | 0 | Aluminum tripolyphosphate | 40 | 0 |
| 35 | Styrene acrylic | 10000 | 65 | Polyethylene | 130 | 0.15 | 20 | - | 0 | Zinc phosphate | 15 | 0 |

(continued)

| Film material No. | Organic resin | | | Wax | | | | Dispersant | | Rust inhibitor | | Silica |
|---|---|---|---|---|---|---|---|---|---|---|---|---|
| | Type | Molecular mass | Proportion (mass%) | Type | Melting point (°C) | Average particle size ($\mu$m) | Proportion (mass%) | Type | Proportion (mass%) | Type | Proportion (mass%) | Proportion (mass%) |
| 36 | Styrene ac-rylic | 10000 | 65 | Polyethylene | 130 | 0.15 | 20 | - | 0 | Zinc oxide | 15 | 0 |
| 37 | Styrene acrylic | 10000 | 64 | Polyethylene | 130 | 0.15 | 20 | - | 0 | Aluminum tripolyphosphate | 15 | 1 |
| 38 | Styrene acrylic | 10000 | 60 | Polyethylene | 130 | 0.15 | 20 | - | 0 | Aluminum tripolyphosphate | 15 | 5 |
| 39 | Styrene acrylic | 10000 | 55 | Polyethylene | 130 | 0.15 | 20 | - | 0 | Aluminum tripolyphosphate | 15 | 10 |
| 40 | Styrene acrylic | 10000 | 50 | Polyethylene | 130 | 0.15 | 20 | - | 0 | Aluminum tripolyphosphate | 15 | 15 |
| 41 | Styrene acrylic | 10000 | 59 | Polyethylene | 130 | 0.15 | 20 | Sodium polycar-boxylate | 1 | Aluminum tripoly-phosphate | 15 | 5 |

[Table 4]

[Table 4]

Table 4

| No. | Base steel sheet | Film material No. | Coating weight (g/m$^2$) | Wax distribution | | Press formability | Weldability | Film removability | Rust resistance | | Adhesion | Remarks |
| | | | | M (/μm) | σ$^2$ | Frictional coefficient | Evaluation | De-filming time (s) | Number of days to rust occurrence | Evaluation | Strength (MPa) | |
|---|---|---|---|---|---|---|---|---|---|---|---|---|
| 1 | B | 1 | 1.0 | 25.3 | 0.81 | 0.099 | Good | 30 | 28 | Good | 28.5 | Example |
| 2 | B | 1 | <u>0.2</u> | 23.5 | <u>1.52</u> | 0.124 | Good | 10 | 35 | Good | 29.1 | Comparative Example |
| 3 | B | 1 | 0.3 | 31.6 | 0.95 | 0.114 | Good | 10 | 35 | Good | 29.0 | Example |
| 4 | B | 1 | 0.7 | 25.8 | 0.86 | 0.108 | Good | 20 | 28 | Good | 28.1 | Example |
| 5 | B | 1 | 2.0 | 24.7 | 0.77 | 0.095 | Good | 60 | 28 | Good | 22.5 | Example |
| 6 | B | 1 | 2.5 | 22.5 | 0.75 | 0.097 | Good | 120 | 28 | Good | 20.6 | Example |
| 7 | B | 1 | 3.0 | 29.1 | 0.73 | 0.099 | Insufficient | 150 | 28 | Good | 17.5 | Example |
| 8 | B | 2 | 1.0 | 27.2 | 0.83 | 0.115 | Good | 30 | 14 | Acceptable | 28.5 | Example |
| 9 | B | 3 | 1.0 | 25.1 | 0.80 | 0.100 | Good | 30 | 28 | Good | 29.0 | Example |
| 10 | B | 4 | 1.0 | 30.7 | 0.81 | 0.110 | Good | 30 | 28 | Good | 20.5 | Example |
| 11 | B | 5 | 1.0 | 22.2 | 0.84 | 0.111 | Good | 30 | 28 | Good | 17.3 | Example |
| 12 | B | <u>6</u> | 1.0 | 24.6 | 0.79 | 0.145 | Good | 30 | 28 | Good | 27.0 | Comparative Example |
| 13 | B | 7 | 1.0 | 22.8 | 0.97 | 0.114 | Good | 30 | 28 | Good | 28.9 | Example |
| 14 | B | <u>8</u> | 1.0 | 23.8 | 0.91 | 0.161 | Good | 30 | 28 | Good | 29.0 | Comparative Example |
| 15 | B | 9 | 1.0 | 30.6 | 0.82 | 0.113 | Good | 30 | 28 | Good | 27.5 | Example |
| 16 | B | 10 | 1.0 | 29.1 | 0.95 | 0.115 | Good | 30 | 28 | Good | 22.9 | Example |
| 17 | B | <u>11</u> | 1.0 | 27.5 | <u>1.55</u> | 0.134 | Good | 30 | 28 | Good | 21.4 | Comparative Example |
| 18 | B | <u>12</u> | 1.0 | | | 0.210 | Good | 30 | 28 | Good | 29.2 | Comparative Example |

EP 4 512 616 A1

| No. | Base steel sheet | Film material No. | Coating weight (g/m²) | Wax distribution | | Press formability | Weldability | Film removability | Rust resistance | | Adhesion | Remarks |
|---|---|---|---|---|---|---|---|---|---|---|---|---|
| | | | | M (/μm) | $\sigma^2$ | Frictional coefficient | Evaluation | De-filming time (s) | Number of days to rust occurrence | Evaluation | Strength (MPa) | |
| 19 | B | 13 | 1.0 | 119.8 | 0.95 | 0.115 | Good | 30 | 28 | Good | 28.8 | Example |
| 20 | B | 14 | 1.0 | 59.5 | 0.92 | 0.108 | Good | 30 | 28 | Good | 28.6 | Example |

[Table 5]

[Table 5]

Table 5

| No. | Base steel sheet | Film material No. | Coating weight (g/m$^2$) | Wax distribution | | Press formability | Weldability | Film removability | Rust resistance | | Adhesion | Remarks |
| | | | | M (/μm) | σ$^2$ | Frictional coefficient | Evaluation | De-filming time (s) | Number of days to rust occurrence | Evaluation | Strength (MPa) | |
|---|---|---|---|---|---|---|---|---|---|---|---|---|
| 21 | B | 15 | 1.0 | 11.9 | 0.90 | 0.099 | Good | 120 | 28 | Good | 22.6 | Example |
| 22 | B | 16 | 1.0 | 10.5 | 0.91 | 0.101 | Good | 180 | 28 | Good | 12.4 | Example |
| 23 | B | 17 | 1.0 | 30.1 | 0.85 | 0.114 | Good | 30 | 7 | Acceptable | 29.0 | Example |
| 24 | B | 18 | 1.0 | 26.8 | 0.51 | 0.097 | Good | 30 | 28 | Good | 28.3 | Example |
| 25 | B | 19 | 1.0 | 28.9 | 0.32 | 0.094 | Good | 30 | 28 | Good | 27.8 | Example |
| 26 | B | 20 | 1.0 | 26.2 | 0.49 | 0.096 | Good | 30 | 28 | Good | 24.3 | Example |
| 27 | B | 21 | 1.0 | 23.9 | 0.70 | 0.098 | Good | 30 | 28 | Good | 21.2 | Example |
| 28 | B | 22 | 1.0 | 25.9 | 0.85 | 0.102 | Good | 30 | 28 | Good | 19.7 | Example |
| 29 | B | 19 | 0.3 | 25.9 | 0.48 | 0.114 | Good | 10 | 35 | Good | 28.8 | Example |
| 30 | B | 19 | 2.0 | 25.0 | 0.31 | 0.092 | Good | 60 | 28 | Good | 22.2 | Example |
| 31 | B | 19 | 2.5 | 22.3 | 0.29 | 0.091 | Good | 120 | 28 | Good | 20.5 | Example |
| 32 | B | 23 | 1.0 | 23.1 | 0.38 | 0.096 | Good | 30 | 28 | Good | 27.7 | Example |
| 33 | B | 24 | 1.0 | 26.5 | 0.41 | 0.097 | Good | 30 | 28 | Good | 28.1 | Example |
| 34 | B | 25 | 1.0 | 26.1 | 0.42 | 0.097 | Good | 30 | 28 | Good | 27.9 | Example |
| 35 | B | 26 | 1.0 | 25.6 | 0.86 | 0.114 | Good | 60 | 28 | Good | 28.4 | Example |
| 36 | B | 27 | 1.0 | 22.4 | 0.88 | 0.111 | Good | 30 | 28 | Good | 28.2 | Example |
| 37 | B | 28 | 1.0 | 25.2 | 0.80 | 0.096 | Good | 30 | 14 | Acceptable | 28.6 | Example |
| 38 | B | 29 | 1.0 | 23.8 | 0.87 | 0.109 | Good | 30 | 28 | Good | 28.3 | Example |
| 39 | B | 30 | 1.0 | 30.7 | 0.89 | 0.108 | Good | 30 | 28 | Good | 28.5 | Example |
| 40 | B | 31 | 1.0 | 22.7 | 0.79 | 0.110 | Good | 30 | 35 | Good | 28.4 | Example |

[Table 6]

[Table 6]

Table 6

| No. | Base steel sheet | Film material No. | Coating weight (g/m²) | Wax distribution M (/μm) | Wax distribution σ² | Press formability Frictional coefficient | Weldability Evaluation | Film removability De-filming time (s) | Rust resistance Number of days to rust occurrence | Rust resistance Evaluation | Adhesion Strength (MPa) | Remarks |
|---|---|---|---|---|---|---|---|---|---|---|---|---|
| 41 | B | 32 | 1.0 | 27.4 | 0.82 | 0.112 | Good | 30 | 56 or more | Excellent | 28.4 | Example |
| 42 | B | 33 | 1.0 | 30.6 | 0.88 | 0.111 | Good | 30 | 56 or more | Excellent | 24.1 | Example |
| 43 | B | 34 | 1.0 | 23.1 | 0.92 | 0.114 | Good | 30 | 56 or more | Excellent | 15.9 | Example |
| 44 | B | 35 | 1.0 | 22.2 | 0.83 | 0.105 | Good | 30 | 56 or more | Excellent | 28.7 | Example |
| 45 | B | 36 | 1.0 | 21.0 | 0.80 | 0.101 | Good | 30 | 56 or more | Excellent | 28.5 | Example |
| 46 | B | 37 | 1.0 | 22.7 | 0.66 | 0.102 | Good | 30 | 56 or more | Excellent | 28.5 | Example |
| 47 | B | 38 | 1.0 | 28.9 | 0.54 | 0.104 | Good | 30 | 56 or more | Excellent | 25.5 | Example |
| 48 | B | 39 | 1.0 | 26.8 | 0.59 | 0.103 | Good | 60 | 56 or more | Excellent | 22.7 | Example |
| 49 | B | 40 | 1.0 | 23.4 | 0.73 | 0.107 | Good | 90 | 56 or more | Excellent | 12.5 | Example |
| 50 | B | 41 | 0.3 | 25.6 | 0.47 | 0.113 | Good | 30 | 56 or more | Excellent | 28.9 | Example |
| 51 | B | 41 | 1.0 | 27.1 | 0.33 | 0.095 | Good | 30 | 56 or more | Excellent | 25.7 | Example |
| 52 | B | 41 | 2.0 | 26.5 | 0.31 | 0.092 | Good | 60 | 56 or more | Excellent | 22.4 | Example |
| 53 | B | No film | | | | 0.175 | Good | 0 | 56 or more | Excellent | 29.0 | Comparative Example |
| 54 | C | 1 | 1.0 | 22.3 | 0.84 | 0.109 | Good | 30 | 28 | Good | 30.1 | Example |
| 55 | C | 1 | 0.2 | 29.1 | 1.65 | 0.137 | Good | 10 | 35 | Good | 29.9 | Comparative Example |
| 56 | C | 1 | 0.3 | 31 | 1.41 | 0.129 | Good | 10 | 35 | Good | 30.2 | Comparative Example |
| 57 | C | 1 | 2.0 | 21.8 | 0.81 | 0.103 | Good | 60 | 28 | Good | 24.5 | Example |
| 58 | C | 1 | 2.5 | 26.2 | 0.78 | 0.099 | Good | 120 | 28 | Good | 21.5 | Example |
| 59 | C | 1 | 3.0 | 21.0 | 0.77 | 0.101 | Insufficient | 150 | 28 | Good | 18.3 | Example |

(continued)

| No. | Base steel sheet | Film material No. | Coating weight (g/m²) | Wax distribution M (/μm) | Wax distribution σ² | Press formability Frictional coefficient | Weldability Evaluation | Film removability De-filming time (s) | Rust resistance Number of days to rust occurrence | Rust resistance Evaluation | Adhesion Strength (MPa) | Remarks |
|---|---|---|---|---|---|---|---|---|---|---|---|---|
| 60 | C | | No film | | | 0.173 | Good | 0 | 56 or more | Excellent | 30.7 | Comparative Example |

[Table 7]

[Table 7]

Table 7

| No. | Base steel sheet | Film material No. | Coating weight (g/m²) | Wax distribution | | Press formability | Weldability | Film removability | Rust resistance | | Adhesion | Remarks |
| | | | | M (/μm) | σ² | Frictional coefficient | Evaluation | De-filming time (s) | Number of days to rust occurrence | Evaluation | Strength (MPa) | |
|---|---|---|---|---|---|---|---|---|---|---|---|---|
| 61 | C | 19 | 1.0 | 29.8 | 0.40 | 0.103 | Good | 30 | 28 | Good | 30.0 | Example |
| 62 | C | 19 | 0.3 | 22.1 | 0.51 | 0.115 | Good | 10 | 35 | Good | 29.8 | Example |
| 63 | A | 1 | 1.0 | 31.2 | 0.78 | 0.094 | Good | 30 | 28 | Good | 27.6 | Example |
| 64 | A | 1 | 0.2 | 26.9 | 1.43 | 0.128 | Good | 10 | 35 | Good | 27.8 | Comparative Example |
| 65 | A | 1 | 0.3 | 30.2 | 0.93 | 0.113 | Good | 10 | 35 | Good | 27.9 | Example |
| 66 | A | 1 | 2.0 | 30.4 | 0.75 | 0.092 | Good | 60 | 28 | Good | 21.9 | Example |
| 67 | A | 1 | 2.5 | 28.6 | 0.74 | 0.091 | Good | 120 | 28 | Good | 20.1 | Example |
| 68 | A | 1 | 3.0 | 26.6 | 0.72 | 0.092 | Insufficient | 150 | 28 | Good | 15.3 | Example |
| 69 | A | No film | | | | 0.173 | Good | 0 | 56 or more | Excellent | 27.9 | Comparative Example |
| 70 | A | 19 | 1.0 | 24.6 | 0.33 | 0.090 | Good | 30 | 28 | Good | 27.3 | Example |
| 71 | A | 19 | 0.3 | 30.6 | 0.48 | 0.113 | Good | 10 | 35 | Good | 27.7 | Example |
| 72 | D | 1 | 1.0 | 22.7 | 0.85 | 0.107 | Good | 30 | 28 | Good | 31.2 | Example |
| 73 | D | 1 | 0.2 | 31.0 | 1.70 | 0.154 | Good | 10 | 35 | Good | 31.5 | Comparative Example |
| 74 | D | 1 | 0.3 | 24.9 | 1.49 | 0.129 | Good | 10 | 35 | Good | 31.7 | Comparative Example |
| 75 | D | 1 | 2.0 | 27.1 | 0.84 | 0.103 | Good | 60 | 28 | Good | 25.5 | Example |
| 76 | D | 1 | 2.5 | 21.7 | 0.83 | 0.108 | Good | 120 | 28 | Good | 21.7 | Example |
| 77 | D | 1 | 3.0 | 26.0 | 0.81 | 0.105 | Insufficient | 150 | 28 | Good | 19.0 | Example |
| 78 | D | No film | | | | 0.179 | Good | 0 | 56 or more | Excellent | 31.6 | Comparative Example |

| No. | Base steel sheet | Film material No. | Coating weight (g/m²) | Wax distribution | | Press formability | Weldability | Film removability | Rust resistance | | Adhesion | Remarks |
|---|---|---|---|---|---|---|---|---|---|---|---|---|
| | | | | M (/μm) | σ² | Frictional coefficient | Evaluation | De-filming time (s) | Number of days to rust occurrence | Evaluation | Strength (MPa) | |
| 79 | D | 19 | 1.0 | 30.0 | 0.42 | 0.102 | Good | 30 | 28 | Good | 31.0 | Example |
| 80 | D | 19 | 0.3 | 28.1 | 0.52 | 0.115 | Good | 10 | 35 | Good | 31.4 | Example |

REFERENCE SIGNS LIST

1    sample for frictional coefficient measurement
2    sample table
3    slide table
4    rolls
5    slide table support
6    bead
7    first load cell
8    second load cell
9    rail

**Claims**

1.  A coated steel sheet comprising a base steel sheet and, on at least one side of the base steel sheet, a film containing organic resin and wax, wherein

    the organic resin is at least one selected from the group consisting of acrylic resins, epoxy resins, urethane resins, phenolic resins, vinyl acetate resins, and polyester resins,
    the wax is polyolefin wax having a melting point that is 100 °C or more and 145 °C or less and an average particle size that is 3.0 $\mu$m or less,
    the film has a distribution of the wax with a value of $\sigma^2$ defined by Expression (1) below that is 1.0 or less and a value of M defined by Expression (2) below that is 130 or less,
    coating weight of the film per side is 0.3 g/m$^2$ or more,

    [Math. 1]

    $$\sigma^2 = \frac{1}{m^2} \sum_i \frac{(S_i - m)^2}{N} \qquad (1)$$

    [Math. 2]

    $$M = \frac{m}{\frac{4}{3}\pi r^3} \qquad (2)$$

    where

    $\sigma^2$ is variance normalized by average area of Voronoi polygons obtained by Voronoi partitioning for the distribution of the wax on a surface of the film,
    $S_i$ is area in $\mu$m$^2$ of the Voronoi polygons,
    m is the average area in $\mu$m$^2$ of the Voronoi polygons,
    N is total number of the Voronoi polygons,
    M is the average area of the Voronoi polygons normalized by volume per particle of the wax, per $\mu$m, and
    r is average radius in $\mu$m of the wax.

2.  The coated steel sheet according to claim 1, wherein

    the proportion of the organic resin in the film is 30 mass% or more and 95 mass% or less, and
    the proportion of the wax in the film is 5 mass% or more and 50 mass% or less.

3.  The coated steel sheet according to claim 1 or 2, wherein arithmetic mean roughness Ra of a surface of the base steel sheet is 0.4 $\mu$m or more and 2.5 $\mu$m or less.

4. The coated steel sheet according to any one of claims 1 to 3, wherein the coating weight of the film per side is 2.5 g/m$^2$ or less.

5. The coated steel sheet according to any one of claims 1 to 4, wherein the organic resin is an alkali soluble resin.

6. The coated steel sheet according to any one of claims 1 to 5, wherein the film further contains a rust inhibitor.

7. The coated steel sheet according to claim 6, wherein the rust inhibitor is at least one selected from the group consisting of aluminum salts of phosphates, zinc salts, and zinc oxide.

8. The coated steel sheet according to any one of claims 1 to 7, wherein the film further contains a dispersant.

9. The coated steel sheet according to claim 8, wherein the dispersant is at least one selected from the group consisting of sodium polycarboxylate, sodium polyacrylate, carboxylic acid copolymers, and sulfonic acid copolymers.

10. The coated steel sheet according to any one of claims 1 to 9, wherein the film further contains silica.

11. A method of producing the coated steel sheet according to any one of claims 1 to 10, the method comprising applying a film material containing organic resin and wax to at least one side of a base steel sheet and drying, wherein

the organic resin is at least one selected from the group consisting of acrylic resins, epoxy resins, urethane resins, phenolic resins, vinyl acetate resins, and polyester resins,
and the wax is polyolefin wax having a melting point that is 100 °C or more and 145 °C or less and an average particle size that is 3.0 $\mu$m or less.

12. The method of producing the coated steel sheet according to claim 11, wherein the maximum arrival temperature of the base steel sheet at the time of the drying is 60 °C or more and the melting point of the wax or less.

13. The method of producing the coated steel sheet according to claim 11 or 12, wherein the proportion of total solid content in the film material is 1 mass% or more and 30 mass% or less.

## FIG. 1

2 μm

## FIG. 2

2 μm

## FIG. 3

## FIG. 4

EP 4 512 616 A1

## FIG. 5

# FIG. 6

## INTERNATIONAL SEARCH REPORT

| International application No. |
| --- |
| **PCT/JP2023/018184** |

**A.    CLASSIFICATION OF SUBJECT MATTER**

**B32B 27/18**(2006.01)i; **C09D 191/06**(2006.01)i; **C09D 201/00**(2006.01)i; **B32B 15/08**(2006.01)i; **C09D 7/45**(2018.01)i;
**C09D 7/61**(2018.01)i; **C09D 7/63**(2018.01)i; **C23C 26/00**(2006.01)i
FI:    B32B15/08 G; C09D201/00; C09D191/06; C09D7/45; C09D7/61; C09D7/63; B32B27/18 Z; C23C26/00 A

According to International Patent Classification (IPC) or to both national classification and IPC

**B.    FIELDS SEARCHED**

Minimum documentation searched (classification system followed by classification symbols)

B32B27/18; C09D191/06; C09D201/00; B32B15/08; C09D7/45; C09D7/61; C09D7/63; C23C26/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2021-147657 A (JFE STEEL CORP) 27 September 2021 (2021-09-27)<br>claims | 1-13 |
| A | JP 2001-140080 A (NIPPON STEEL CORP) 22 May 2001 (2001-05-22)<br>claims | 1-13 |
| A | JP 10-237478 A (NIPPON PARKERIZING CO LTD) 08 September 1998 (1998-09-08)<br>claims | 1-13 |
| P, X | WO 2023/062875 A1 (JFE STEEL CORP) 20 April 2023 (2023-04-20)<br>examples | 1-13 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **02 August 2023** | **15 August 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/018184**

| Patent document cited in search report | | | Publication date (day/month/year) | Patent family member(s) | | | Publication date (day/month/year) |
|---|---|---|---|---|---|---|---|
| JP | 2021-147657 | A | 27 September 2021 | US claims | 2023/0105429 | A1 | |
| | | | | WO | 2021/187253 | A1 | |
| | | | | EP | 4122702 | A1 | |
| | | | | KR | 10-2022-0129052 | A | |
| | | | | CN | 115244218 | A | |
| JP | 2001-140080 | A | 22 May 2001 | US claims | 6479152 | B1 | |
| | | | | EP | 1099485 | A2 | |
| JP | 10-237478 | A | 08 September 1998 | (Family: none) | | | |
| WO | 2023/062875 | A1 | 20 April 2023 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H09170059 A
- JP H10052881 A
- JP 2000309747 A
- JP 2000167981 A